# EUROPÄISCHE PATENTSCHRIFT

(11) **EP 2 951 908 B1**
(45) Veröffentlichungstag und Bekanntmachung des Hinweises auf die Patenterteilung: **26.10.2016**
(21) Anmeldenummer: 14700697.7
(22) Anmeldetag: 16.01.2014
(51) Int. Cl.: H02K 5/20, B66D 1/28, B66D 1/12, H02K 9/04, H02K 7/14

(54) **KÜHLUNGSRING**
COOLING RING
BAGUE DE REFROIDISSEMENT

(30) Priorität: 04.02.2013 DE 102013001949
(43) Veröffentlichungstag der Anmeldung: 09.12.2015
(73) Patentinhaber: Siemag Tecberg GmbH, 35708 Haiger (DE)
(72) Erfinder: BERNS, Jakob, 35708 Haiger (DE); SONNEBORN, Stephan, 57334 Bad Laasphe (DE)
(74) Vertreter: Sonnenberg, Fred
(86) Internationale Anmeldenummer: PCT/EP2014/050820
(87) Internationale Veröffentlichungsnummer: WO 2014/118012

(56) Entgegenhaltungen:
- EP-A1- 0 115 788
- DE-C1- 4 405 593
- DE-U1-202004 015 064
- GB-A- 704 344
- US-A1- 2005 079 069

## Beschreibung

Die vorliegende Erfindung bezieht sich auf eine Vorrichtung zur Kühlluftführung an einer Fördermaschine, wie durch den Oberbegriff des unabhängigen Anspruches 1 beschrieben.

Durch die immer größere benötigte Leistung von Fördermaschinen werden immer größere Anforderungen an die Kühlung der in den Seilträgern angeordneten elektrischen Einrichtungen wie Antriebe oder Generatoren gestellt. Es wurden bereits Lösungen mit z.B. einer hohlen Achse zur Kühllufteinbringung vorgeschlagen, auf welcher der Seilträger gelagert ist, sowie die Ein- und Ausleitung von Kühlluft über die Seiten der Seilträger durch Lufthauben oder feststehende Strömungsringe auf der Achse der Fördermaschine.

Bei steigenden Leistungen der Fördermaschinen stoßen die bisherigen Maßnahmen an wirtschaftliche und technische Grenzen. So ist im Falle einer Hohlachse der mit Kühlluft durchströmbare Innendurchmesser unter anderem durch die hohen Herstellungskosten begrenzt. Im Falle von feststehenden Strömungsringen auf der Achse der Fördermaschine werden z.B. die Lager dem Seilträger, welche auf den Strömungsringen sitzen, zwangsläufig in ihrem Durchmesser immer größer, um einen erhöhten Strömungsquerschnitt zu ermöglichen. Diese Vergrößerung des Lagerdurchmessers hat eine Kostensteigerung der Lager sowie im Falle eines Ausfalles, eine verlängerte Wiederbeschaffungszeit eines Ersatzlagers zur nachteiligen Folge. Weiterhin kann es notwendig werden, dass bei gesteigerter Leistung der Fördermaschine und begrenztem Strömungsquerschnitt der bisherigen Lösungen, die eingebrachte Kühlluft zusätzlich gekühlt bzw. klimatisiert werden muss, was weitere Kosten bei Aufstellung und Betrieb verursacht, sowie einen erhöhten Platzbedarf der Anlage.

Die Erfindung hat es daher zur Aufgabe, eine verbessere Kühlluftführung für Fördermaschinen bereit zu stellen, um den oben genannten Nachteilen bei Fördermaschinen mit gesteigerter Leistung entgegen zu wirken. Dies wird durch eine Vorrichtung zu Kühlluftführung gemäß den Merkmalen des unabhängigen Anspruches 1 erreicht.

Bei der Erfindung wird der Seilträger bzw. die Trommel mit Kühlluft zwangsbelüftet, wobei die Luft ein- und / oder aus dem Seilträger bzw. der Trommel heraus gebracht wird, vermittels einer Vorrichtung zur Kühlluftführung und einem oder einer Vielzahl von Ventilatoren bzw. Gebläsen. Diese Vorrichtung umfasst zumindest eine erste sich mit dem Seilträger drehende Luftführung und zumindest eine in Bezug auf den Seilträger stehende zweite Luftführung. Die beiden Luftführungen sind zum Luftaustausch bzw. der Führung eines Luftstromes miteinander kommunizierend ausgebildet.

Für einen bestmögliche Kühlung des Inneren des Seilträgers ist es wünschenswert, dass die mit Ventilatoren oder Gebläsen auf der einen Seite des Seilträgers über die beiden Luftführungen in das Innere des Seilträgers eingeblasene Luft, auf der anderen Seite des Seilträgers über zwei weitere der Luftführungen unter Verwendung zumindest eines weiteren Ventilators oder Gebläses wieder aus dem Seilträger abgezogen bzw. abgesaugt wird. Eine nur einseitige Be- oder Entlüftung vermittels der Erfindung ist aus Kostengründen ebenso denkbar, hierbei würde die Kühlluft auf einer der Seiten des Seilträgers nicht unterstützt ein- bzw. austreten.

Bei der Erfindung können die ersten und zweiten Luftführungen als ineinander laufende Ringe ausgeführt sein. Dabei handelt es sich um konzentrische Ringe, deren Durchmesser so gewählt sind, dass jeweils ein Ring unter geringen Spalt an den Außenseiten in den anderen Ring passt. Hierbei kann sowohl die erste Luftführung, als auch die zweite Luftführung den größeren Außendurchmesser aufweisen. Zwischen den Ringen können zur Wirkungsgradverbesserung bzw. zur Reduzierung der Verluste des Luftstroms alle geeigneten Abdichtungen wie durch geometrische Ausgestaltung der Luftführungen (z.B. Labyrinthdichtungen) oder auch durch zwischen den Ringen angebrachte oder eingelegte und in diesem Falle an einem der Ringe geführten Dichtung oder mehrere Dichtungen sowie Kombinationen aus verschiedenen Dichtungstypen zum Einsatz kommen. Weiterhin kann vorzugsweise der sich drehende Ring aus einem Z-Profil oder Doppel-L-Profil gebildet sein, sodass eine Kammer an dem Seilträger entsteht, welche ein zusätzliches Volumen zum Ausgleich von Druckschwankungen der Kühlluft darstellt.

Zum Zwecke des Ein- und Ausleitens der Kühlluft sind in den seitlichen Trommelblechen bzw. Seitenschilden oder auch Seitenblechen der die zu kühlenden Elemente umgebenden Seilträger Lüftungsöffnungen angebracht. Diese Lüftungsöffnungen können durch die erste Luftführung überdeckt werden, sodass eine durchlässige Verbindung zwischen der ersten Luftführung, dem Seitenschild und dem Inneren des Seilträgers hergestellt ist. Somit kann in die zweite (stehende) Luftführung eingebrachte Kühlluft durch diese zweite Luftführung in die sich drehende erste Luftführung gelangen bzw. geblasen werden und erreicht von dort aus das Innere des Seilträgers und damit die zu kühlenden Elemente. Über Lüftungsöffnungen am gegenüberliegenden bzw. zweiten Seitenschild kann die eingebrachte Kühlluft so dann wieder aus dem Seilträger ausströmen oder abgesaugt werden. Wenn die Kühlluft ebenfalls geführt aus dem Seilträger gebracht werden soll, so tritt die Kühlluft durch Lüftungsöffnungen im gegenüberliegenden bzw. zweiten Seitenschild wieder aus dem Seilträger in eine weitere sich mitdrehende Luftführung ein und geht von dort aus in eine weitere in Bezug auf den Seilträger stehende Luftführung über. Aus dieser stehenden Luftführung kann die dann erwärmte Kühlluft unter ggf. Zwischenschaltung eines Gebläses bzw. Ventilators abgeleitet werden.

Die Kühlluft kann über jegliche den Umgebungsbedingungen angepasste Zuführungen in die jeweils feststehenden Luftführungen gelangen. Dies können Luftkanäle, Schläuche, Rohre etc. sein. Auch direkt in der direkten Umgebung der Luftführungen eingebaute Ventilatoren bzw. Gebläse sind denkbar.

Weitere Eigenschaften und Vorteile der Erfindung ergeben sich aus der folgenden, rein demonstrativen und in keiner Weise beschränkenden Beschreibung verschiedener Ausführungsformen der Erfindung unter Bezugnahme auf die beigefügten Zeichnungen. Insbesondere können die Merkmale der verschiedenen Ausführungsformen auch untereinander kombiniert werden. Es zeigt jeweils in den beigefügten Zeichnungen:
Figur 1 eine Fördermaschine des Standes der Technik mit einer Hohlachse;
Figur 2 eine Fördermaschine des Standes der Technik mit einem Strömungsring, welcher auf der Achse zwischen der Seilträgerlagerung und der Achse angeordnet ist;
Figur 3 eine Schnittdarstellung einer schematisch dargestellten Fördermaschine, wobei die erfindungsgemäße Vorrichtung im Bereich X durch die nachfolgenden Figuren der Ausführungsbeispiele genauer dargestellt wird;
Figur 4 eine ausgebrochene Seitenansicht eines Seitenblechs mit Lüftungsöffnungen;
Figur 5 eine erste Ausführungsform, welche den Bereich X der Figur 3 detaillierter darstellt;
Figur 6 eine zweite Ausführungsform, welche den Bereich X der Figur 3 detaillierter darstellt;
Figur 7 die detaillierte Darstellung des Bereiches E der Figur 6 einer optionalen Abdichtung zwischen der ersten und der zweiten Luftführung;

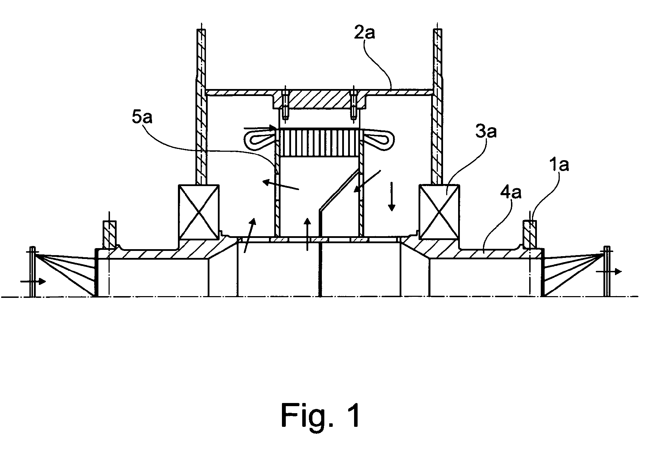

Figur 1 zeigt eine bekannte Fördermaschine, bei welcher ein Seilträger 2a über eine hohle Hauptachse 4a belüftet wird. Der Seilträger 3a ist auf der hohlen Hauptachse 4a vermittels spiegelbildlich angeordneter Lager 3a gelagert, wobei die hohle Hauptachse 4a über ebenso spiegelbildlich zueinander angeordnete Lagerständer 1a gehalten wird. In der Figur 1 geben die Pfeile den Luftstrom durch die Anordnung an. Dieser wird von der rechten Seite in die hohle Hauptachse 4a zugeführt, tritt dann durch Öffnungen in den Seilträger 2a ein, durchströmt die elektrische Einrichtung 5a innerhalb des Seilträgers 2a, geht durch Öffnungen wieder in die hohle Hauptachse 4a über und verlässt die Anordnung auf der linken Seite wieder. Nachteilig bei dieser Lösung ist die komplizierte Ausgestaltung der hohlen Hauptachse 4a und die damit verbundenen hohen Fertigungskosten für die Achse und die Lager 3a.

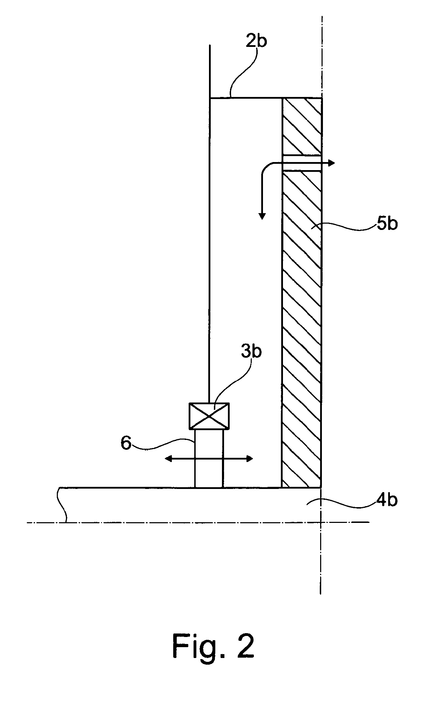

Figur 2 zeigt eine weitere bekannte Fördermaschine, bei welcher die Kühlluft (Pfeile) über einen Strömungsring 6 in einen Seilträger 2b einer Fördermaschine hinein und aus dem Seilträger auf der gegenüberliegenden Seite wieder heraus strömt. Dabei durchströmt die Kühlluft die zu kühlende elektrische Einrichtung 5b innerhalb des Seilträgers 2b. Der Strömungsring 6 ist zwischen einer konventionellen, nicht drehenden Hauptachse 4b der Fördermaschine und einer Lagerung 3b des Seilträgers 2b angeordnet, was zwangsläufig den Durchmesser der Seilträgerlagerung 3b vergrößert und damit die Lagerung 3b verteuert und die Beschaffung erschwert.

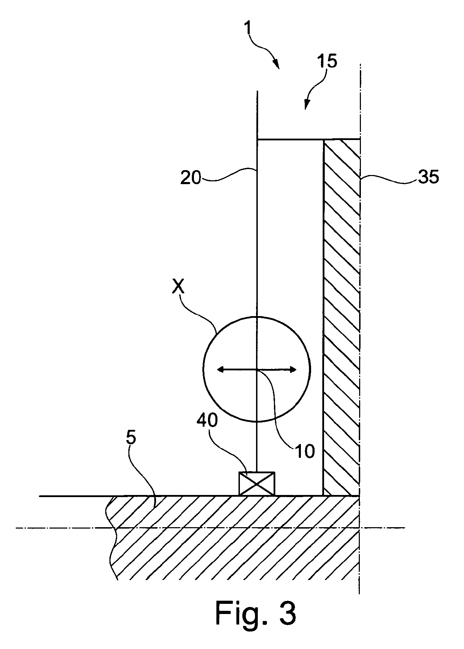

Figur 3 zeigt eine Schnittdarstellung einer schematischen Fördermaschine 1, welche symmetrisch aufgebaut ist, bei der eine Achse 5 einem Seilträger 15 mit seitlichen Trommelblechen bzw. Seitenblechen 20 über eine Lagerung 40 drehbar trägt. Innerhalb des Seilträgers 15 ist z.B. ein bekannter elektrischer Antrieb oder Generator als elektrische Einrichtung 35 angeordnet, auf welchen im Rahmen dieser Beschreibung nicht eingegangen wird, da er nicht erfindungswesentlich ist. Als einzige Bedingung an diese elektrische Einrichtung 35 im Rahmen dieser Erfindungsbeschreibung gilt, dass er in seinem Aufbau so beschaffen sein muss, dass er von Kühlluft durchströmt werden kann. Das Seitenblech 20 weist Lüftungsöffnungen 10 auf. Der Pfeil im Bereich X kennzeichnet die Belüftung des Inneren des Seilträgers 15 durch die Lüftungsöffnungen 10.

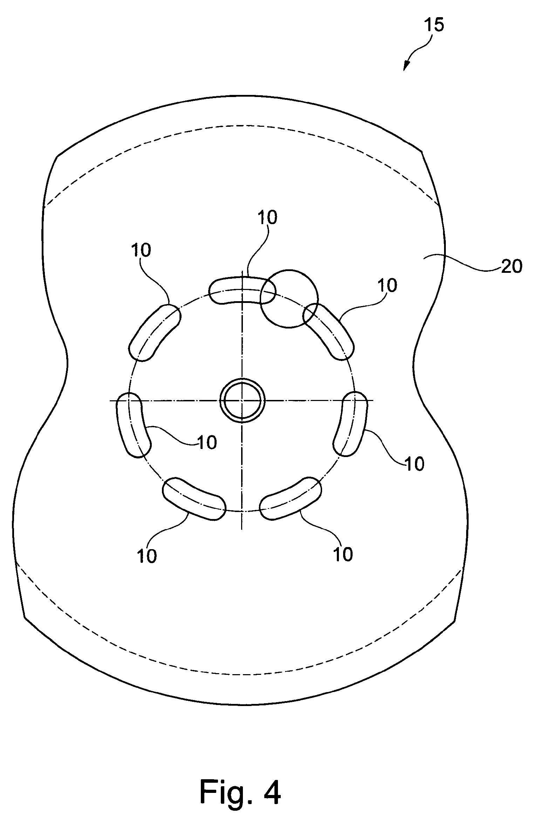

Figur 4 zeigt eine ausgebrochene Seitenansicht des Seitenblechs 20 des Seilträgers 15 mit sieben der Lüftungsöffnungen 10. Die Anzahl der Lüftungsöffnungen 10 ist beliebig, sowie deren Lage im Seitenblech 20. Weiterhin ist es nicht notwendig, dass alle Lüftungsöffnungen 10 auf derselben Kreisbahn um das Drehzentrum liegen.

Die nachfolgende Beschreibung behandelt Ausführungsformen der Erfindung, welche Details des Bereiches X näher beschreiben. Für alle Ausführungsformen gelten die in der Beschreibung zur Figur 3 aufgeführten Merkmale. In der Beschreibung der Ausführungsformen bezeichnen gleiche Bezugszeichen gleiche oder ähnliche Teile.

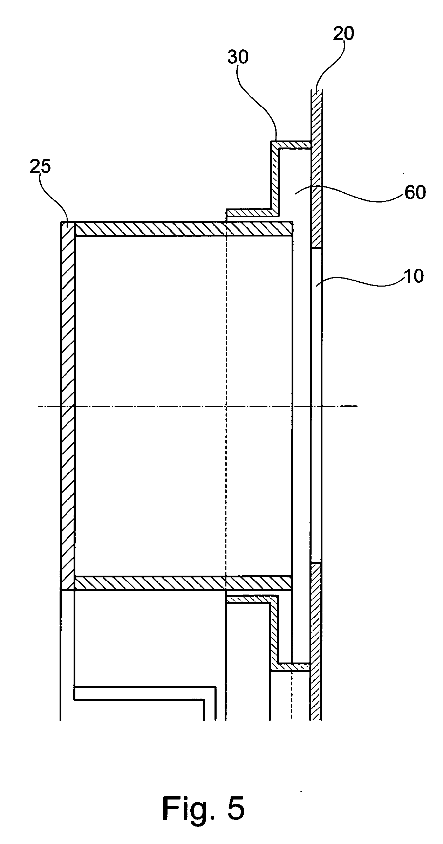

Figur 5 zeigt eine erste Ausführungsform der Erfindung in Bezug auf den Bereich X der Figur 3. Hierbei überdeckt eine ringförmige erste Luftführung 30 die in das Seitenblech 20 eingebrachten Lüftungsöffnungen 10. In diese ersten Luftführung 30 steht die zweite Luftführung 25 berührungslos hinein, sodass sich die drehende erste Luftführung 30 und die stehende zweite Luftführung 25 im Wesentlichen kontaktfrei laufen. Wird nun die stehende zweite Luftführung 25 mit Kühlluft kommend von einem Gebläse oder Ventilator beaufschlagt, so tritt diese aus der zweiten Luftführung 25 aus und wird durch die kommunizierende Verbindung der ersten mit der zweiten Luftführung durch die erste sich mit dem Seitenblech 20 drehende Luftführung 30 weiter zu der Lüftungsöffnung 10 und durch diese hindurch in das Innere des Seilträgers 15 geleitet, um die elektrischen Einrichtung 35 (nicht gezeigt) zu kühlen.

Durch die Z-Form oder Doppelte-L-Form der ersten Luftführung 30 wird zwischen der ersten Luftführung 30 und dem Seitenblech 20 ein Ausgleichsraum 60 geschaffen. Dieser Ausgleichsraum 60 hilft dabei Druckschwankungen der Kühlluft auszugleichen, welche über die zweite Luftführung 25 eingebracht wird.

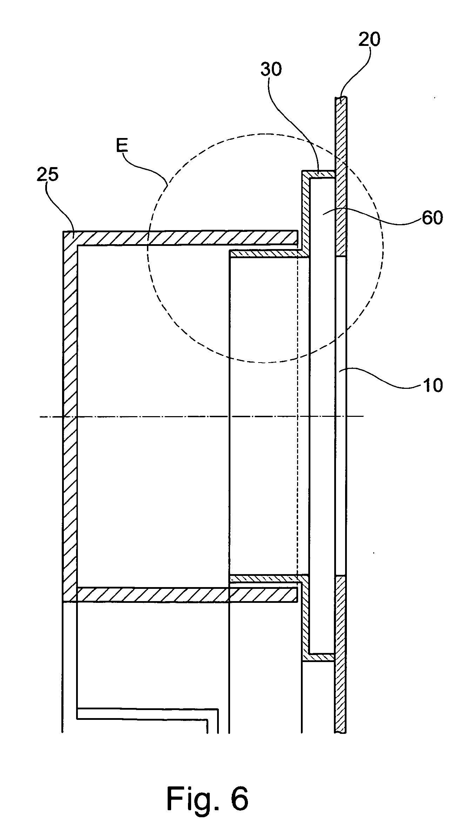

Figur 6 zeigt eine zweite Ausführungsform der Erfindung, ähnlich der ersten Ausführungsform der Figur 5, bei welcher im Gegensatz zur ersten Ausführungsform die erste Luftführung 30 innerhalb der zweiten Luftführung 25 berührungsfrei läuft.

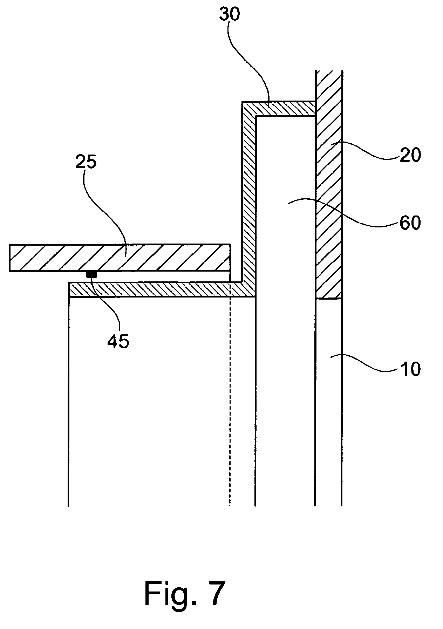

Figur 7 zeigt die Detailansicht des Bereichs E der Figur 6. Hier ist zwischen der ersten Luftführung 30 und der zweiten Luftführung 25 eine Dichtung 45 angeordnet. Diese Dichtung 45 verringert den Verlust von Kühlluft am Übergang von der ersten Luftführung 30 auf die zweite Luftführung 25. Die Dichtung 45 kann aus jedwedem geeigneten Material gefertigt sein. Zu bevorzugen sind Materialien mit einem niedrigen Reibungskoeffizienten. Weiterhin kann die Dichtung 45 durch eine geometrische Form in entweder der ersten oder der zweiten Luftführung an einer definierten Stelle gehalten werden. Diese geometrische Form kann z.B. eine Nut sein. Weiterhin sind auch zusätzliche Elemente denkbar, welche die Dichtung 45 an der definierten Stelle halten oder die Dichtung 45 liegt lose zwischen den Ringen. Die obige Abdichtung kann ebenfalls angewandt werden, wenn der sich drehende Ring innerhalb des stehenden Rings angeordnet ist, oder bereits eine Abdichtung vermittels geometrischer Ausgestaltung der beiden Luftfiihrungen vorgesehen ist.

Für das oben Genannte gilt, dass alle Strukturen, die als belüftend bzw. zum Einblasen der Kühlluft in den Seilträger 15 beschrieben werden, ebenso spiegelbildlich auf der anderen Seite des Seilträgers 15 vorgesehen werden können, um die erwärmte Kühlluft wieder aus dem Seilträger 15 ab zu saugen. Weiterhin kann voneinander unabhängig, sowohl auf der Belüftungsseite, als auch auf der Entlüftungsseite eine andere Ausführungsform der Erfindung zum Einsatz kommen. Zudem kann vermittels einer der Ausführungsformen nur auf einer Seite des Seilträgers 15 entweder Kühlluft eingeblasen oder die erwärmte Luft abgesaugt werden. Hierbei müssen nur Lüftungsöffnungen vorgesehen werden, dass Luft ein- oder ausströmen kann. Auch können die Merkmale der der unterschiedlichen Ausführungsformen untereinander unabhängig kombiniert werden.

Weiterhin ist es denkbar die Lüftungsöffnungen 10 geometrisch so zu gestalten, dass sie durch die Drehung des Seilträgers 15 helfen das Innere des Seilträgers zu be- oder entlüften z.B. durch Strukturen wie an einem Schaufel- bzw. Turbinenrad.

Darüber hinaus sind sowohl der Ausgleichsraum 60, als auch die Dichtung 45 für keine der Ausführungsformen notwendige Merkmale.

## Patentansprüche

1. Vorrichtung zur Kühlluftführung einer Fördermaschine (1) mit einem auf einer Achse gelagerten Seilträger (2a, 2b, 15), der mit Lüftungsöffnungen (10) versehene Seitenbleche (20) aufweist, sowie einer innerhalb des Seilträgers (2a, 2b, 15) angeordneten elektrischen Einrichtung (35),
**dadurch gekennzeichnet,**
**dass** zumindest eines der Seitenbleche (20) mit einer ersten, die Lüftungsöffnungen (10) überdeckenden Luftführung (30) versehen ist, und eine zweite, mit der ersten Luftführung (30) zum Luftaustausch kommunizierende, statische Luftführung (25) vorgesehen ist, wobei die erste Luftführung (30) gegenüber der zweiten Luftführung (25) bewegbar ist.

2. Vorrichtung nach Anspruch 1, bei welcher sowohl die erste als auch die zweite Luftführung (30, 25) als konzentrische, zum Luftaustausch kommunizierende Ringe ausgeführt sind.

3. Vorrichtung nach Anspruch einem der vorangegangenen Ansprüche, **dadurch gekennzeichnet, dass** die von Kühlluft durchströmte Querschnittsfläche der ersten Luftführung zumindest gleich groß der durchströmten Querschnittsfläche der zweiten Luftführung ist.

4. Vorrichtung nach einem der vorhergehenden Ansprüche, **dadurch gekennzeichnet, dass** eine Abdichtung zwischen der ersten (30) und zweiten (25) Luftführung vorgesehen ist.

5. Vorrichtung nach Anspruch 4 **dadurch gekennzeichnet, dass** die Abdichtung als geometrische Gestaltung der beiden Luftführungen (30, 25) vorgesehen ist.

6. Vorrichtung nach Anspruch 4 **dadurch gekennzeichnet, dass** die Abdichtung als zumindest ein Dichtelement (45) zwischen den beiden Luftführungen (30, 25) vorgesehen ist.

7. Vorrichtung nach einem der vorhergehenden Ansprüche, **dadurch gekennzeichnet, dass** die zweite Luftführung (25) mit einem Luftstrom beaufschlagbar ist.

## Claims

1. A cooling air guiding apparatus of a hoisting machine (1) having a rope carrier (2a, 2b, 15) that is mounted on an axle and has side plates (20) supplied with ventilation openings (10), and having an electrical device (35) arranged within the rope carrier (2a, 2b, 15), **characterized in that**
at least one of the side plates (20) is supplied with a first air duct (10) covering the ventilation openings (30) and a second, static air duct (25) is provided that communicates with the first air duct (30) for exchanging air, wherein the first air duct (30) is movable relative to the second air duct (25).

2. The apparatus according to claim 1, wherein both the first and the second air duct (30, 25) are configured as concentric rings communicating for exchanging air.

3. The apparatus according to any of the preceding claims, **characterized in that** the cross-section area of the first air duct through which cooling air flows is of at least equal size as the cross-section area of the second air duct through which air flows.

4. The apparatus according to any of the preceding claims, **characterized in that** a seal is provided between the first (30) and the second (25) air duct.

5. The apparatus according to claim 4, **characterized in that** the seal is provided as a geometric design of the two air ducts (30, 25).

6. The apparatus according to claim 4, **characterized in that** the seal is provided as at least one sealing element (45) between the two air ducts (30, 25).

7. The apparatus according to any of the preceding claims, **characterized in that** the second air duct (25) can be loaded with an air flow.

## Revendications

1. Dispositif de guidage d'air de refroidissement pour une machine de levage (1) ayant un porteur de cordes (2a, 2b, 15) monté sur un axe et avec des plaques latérales (20) munies d'ouvertures de ventilation (10), et ayant un dispositif électrique (35) agencé à l'intérieur du porteur de cordes (2a, 2b, 15), **caractérisé en ce que**
au moins l'une des plaques latérales (20) est prévue avec une première conduite d'air (10) couvrant les ouvertures de ventilation (30) et une deuxième conduite d'air statique (25) est fournie qui communique avec la première conduite d'air (30) pour échange d'air, dans lequel la première conduite d'air (30) est mobile par rapport à la deuxième conduite d'air (25).

2. Dispositif selon la revendication 1, dans lequel les première et deuxième conduites d'air (30, 25) sont toutes les deux configurées en tant qu'anneaux concentriques communiquant pour l'échange d'air.

3. Dispositif selon l'une quelconque des revendications précédentes, **caractérisé en ce que** la surface de la section transverse de la première conduite d'air à travers laquelle l'air de refroidissement s'écoule est au moins égale en taille à la surface de la section transverse de la deuxième conduite d'air à travers laquelle l'air s'écoule.

4. Dispositif selon l'une quelconque des revendications précédentes, **caractérisé en ce qu'**une étanchéité est prévue entre la première conduite d'air (30) et la deuxième conduite d'air (25).

5. Appareil selon la revendication 4, **caractérisé en ce que** l'étanchéité est prévue en tant que conception géométrique des deux conduites d'air (30, 25).

6. Dispositif selon la revendication 4, **caractérisé en ce que** l'étanchéité est prévue en tant qu'au moins un élément de joint d'étanchéité (45) entre les deux conduites d'air (30, 25).

7. Dispositif selon l'une quelconque des revendications précédentes, **caractérisé en ce que** la deuxième conduite d'air (25) peut être chargée avec un flux d'air.
